# EUROPÄISCHE PATENTSCHRIFT

(11) **EP 2 489 534 B1**
(45) Veröffentlichungstag und Bekanntmachung des Hinweises auf die Patenterteilung: **12.10.2016**
(21) Anmeldenummer: 12155503.1
(22) Anmeldetag: 15.02.2012
(51) Int. Cl.: B60H 1/22

(54) **Wärmetauscheranordnung, insbesondere für ein brennstoffbetriebenes Fahrzeugheizgerät**
Heat exchanger assembly, in particular for a fuel-powered vehicle heating device
Agencement d'échangeur thermique, notamment pour un appareil de chauffage de véhicule fonctionnant au carburant

(30) Priorität: 15.02.2011 DE 102011004159
(43) Veröffentlichungstag der Anmeldung: 22.08.2012
(73) Patentinhaber: Eberspächer Climate Control Systems GmbH & Co. KG, 73730 Esslingen (DE)
(72) Erfinder: Humburg, Michael, 73035 Göppingen (DE)
(74) Vertreter: RLTG

(56) Entgegenhaltungen:
- EP-A2- 1 296 101
- DE-A1- 3 416 878
- DE-A1- 10 155 844
- DE-A1- 19 749 809
- DE-A1- 19 909 395
- DE-C1- 10 143 479

## Beschreibung

Die vorliegende Erfindung betrifft eine Wärmetauscheranordnung, insbesondere für ein brennstoffbetriebenes Fahrzeugheizgerät, umfassend ein in Richtung einer Längsachse langgestrecktes, topfartiges Wärmetauschergehäuse mit einem Umfangswandungsbereich und in einem Endbereich des Umfangswandungsbereichs einem Bodenwandungsbereich, wobei in dem Wärmetauschergehäuse ein Strömungsraum für Wärmeträgermedium mit einem Umfangsströmungsraum und einem in Verbindung mit dem Umfangsströmungsraum stehenden Bodenströmungsraum gebildet ist, wobei das Wärmetauschergehäuse ein erstes Gehäuseteil und ein in Verbindung mit dem ersten Gehäuseteil den Strömungsraum umschließendes zweites Gehäuseteil umfasst. Solch eine Anordnung ist aus

DE 197 49 809 A1 bekannt.

Es sind Wärmetauscheranordnungen bekannt, deren Wärmetauschergehäuse mit im Allgemeinen topfartiger Formgebung aus zwei für sich jeweils topfartig ausgebildeten Gehäuseteilen zusammengesetzt ist. Eines der Gehäuseteile umfasst eine Außenumfangswandung und eine damit integral ausgebildete Außenbodenwandung. Das andere der Gehäuseteile umfasst eine Innenumfangswandung und eine damit integral ausgebildete Innenbodenwandung. Die beiden topfartig ausgebildeten Gehäuseteile werden ineinander eingesetzt und in ihrem vom Bodenwandungsbereich entfernt liegenden Endbereich miteinander fluiddicht verbunden, so dass zwischen den beiden topfartig ausgebildeten Gehäuseteilen ein Strömungsraum für das Wärmeträgermedium mit einem Umfangssströmungsraum und einem Bodenströmungsraum zwischen den jeweiligen Wandungen gebildet ist.

Aus der DE 197 49 809 A1 ist eine Wärmetauscheranordnung für ein Fahrzeugheizgerät gemäß dem Oberbegriff des Anspruchs 1 bekannt. Bei diesem bekannten Aufbau ist ein erstes Gehäuseteil mit einer Innenumfangswandung und einer Bödenwandung ausgebildet. An der Innenumfangswandung ist an deren von der Innenbodenwandung entfernten axialen Endbereich in radialem Abstand ein Ring vorgesehen, so dass zwischen diesem Ring und der Innenumfangswandung ein Ringraum begrenzt ist. Diesen Ringraum durchsetzt ein am ersten Gehäuseteil integral vorgesehener Abgasstutzen. Ein zweites Gehäuseteil stellt eine Außenumfangswandung und eine Außenbodenwandung bereit, so dass durch Zusammenfügen dieser beiden Gehäuseteile ein Strömungsraum für das in der Wärmetauscheranordnung zu erwärmende Wärmeträgermedium begrenzt ist.

Es ist die Zielsetzung der vorliegenden Erfindung, eine Wärmetauscheranordnung, insbesondere für ein brennstoffbetriebenes Fahrzeugheizgerät, so auszugestalten, dass eine einfachere und damit auch kostengünstigere Herstellbarkeit erreichbar ist.

Erfindungsgemäß wird diese Aufgabe gelöst durch eine Wärmetauscheranordnung, insbesondere für ein brennstoffbetriebenes Fahrzeugheizgerät, gemäß Anspruch 1. Diese umfasst ein in Richtung einer Längsachse langgestrecktes, topfartiges Wärmetauschergehäuse mit einem Umfangswandungsbereich und in einem Endbereich des Umfangswandungsbereichs einem Bodenwandungsbereich, wobei in dem Wärmetauschergehäuse ein Strömungsraum für Wärmeträgermedium mit einem Umfangsströmungsraum und einem in Verbindung mit dem Umfangsströmungsraum stehenden Bodenströmungsraum gebildet ist, wobei das Wärmetauschergehäuse ein erstes Gehäuseteil und ein in Verbindung mit dem ersten Gehäuseteil den Strömungsraum umschließendes zweites Gehäuseteil umfasst, wobei das erste Gehäuseteil umfasst:
- eine Außenumfangswandung,
- eine Innenumfangswandung,
- eine in dem einen Endbereich an die Innenumfangswandung anschließende Innenbodenwandung,
wobei das zweite Gehäuseteil umfasst:
- eine in dem einen Endbereich mit der Außenumfangswandung verbundene oder verbindbare Außenbodenwandung.

Bei der erfindungsgemäß aufgebauten Wärmetauscheranordnung ist die Aufgliederung der verschiedenen Wandungen auf zwei Gehäuseteile anders gestaltet, als beim Stand der Technik. Insbesondere ist der gesamte Umfangswandungsbereich, also sowohl die Außenumfangswandung als auch die Innenumfangswandung, an ein und demselben Gehäusebauteil und mithin als miteinander integrale Bestandteile bereitgestellt. Insbesondere kann dabei für dieses erste Gehäusebauteil ein zur Wärmeaufnahme bzw. hinsichtlich der Wärmefestigkeit optimiertes Material eingesetzt werden, während das zweite Gehäusebauteil in einem thermisch weniger kritischen Bereich angeordnet ist und mithin diesbezüglich weniger aufwendig gestaltet werden muss.

Zum Einleiten bzw. Ausleiten von Wärmeträgermedium in den Strömungsraum wird vorgeschlagen, dass an der Außenumfangswandung ein Wärmeträgermediumeinlass und ein Wärmeträgermediumauslass vorgesehen sind, wobei Einlass oder/und Auslass beispielsweise mit jeweiligen Stutzen und mithin als integraler Bestandteil des ersten Gehäuseteils bereitgestellt werden können.

Um das Vermeiden eines Strömungskurzschlusses zwischen dem Wärmeträgermediumeinlass und dem Wärmeträgermediumauslass zu unterstützen, wird vorgeschlagen, dass der Wärmeträgermediumeinlass und der Wärmeträgermediumauslass zueinander in Umfangsrichtung versetzt sind.

Weiter kann eine definierte Strömungsführung im Strömungsraum dadurch unterstützt werden, dass das erste Gehäuseteil zwischen der Innenumfangswandung und der Außenumfangswandung wenigstens eine in Richtung der Längsachse sich erstreckende Trennwandung umfasst. Eine sehr effiziente Umströmung insbesondere der Innenumfangswandung und der Innenbodenwandung kann dadurch erzwungen werden, dass zwei in Umfangsrichtung in Abstand zueinander angeordnete Trennwandungen einen in Verbindung mit dem Wärmeträgermediumeinlass stehenden ersten Umfangsströmungsraumbereich und einen in Verbindung mit dem Wärmeträgermediumauslass stehenden zweiten Umfangsströmungsraumbereich begrenzen.

Die Wärmeübertragungswechselwirkung zwischen dem ersten Gehäuseteil und dem im Strömungsraum strömenden Wärmeübertragungsmedium kann dadurch verbessert werden, dass das erste Gehäuseteil an einer dem Bodenströmungsraum zugewandten Seite der Innenbodenwandung wenigstens einen ersten Leitvorsprung umfasst.

Dabei kann die definierte Strömungsführung des Wärmeträgermediums im Strömungsraum unterstützt werden, indem der wenigstens eine erste Leitvorsprung sich in Richtung vom ersten Umfangsströmungsraumbereich zum zweiten Umfangsströmungsraumbereich erstreckt.

Ein weiterer Beitrag zur definierten Strömungsführung kann dadurch erhalten werden, dass das zweite Gehäuseteil an einer dem Bodenströmungsraum zugewandten Seite der Außenbodenwandung wenigstens einen zweiten Leitvorsprung umfasst, wobei vorzugsweise vorgesehen sein kann, dass wenigstens ein erster Leitvorsprung und ein diesem zugeordneter zweiter Leitvorsprung sich vorzugsweise gegenseitig berührend in der gleichen Richtung im Bodenströmungsraum erstrecken. Durch eine derartige Anordnung können Strömungskanäle im Bodenströmungsraum definiert werden, welche zu einer weiter verbesserten Wärmeaufnahmecharakteristik beitragen.

Zur Verbindung des zweiten Gehäuseteils mit dem ersten Gehäuseteil wird vorgeschlagen, dass das zweite Gehäuseteil in einem Außenrandbereich einen Verbindungsrandbereich zum fluiddichten Anschluss des zweiten Gehäuseteils an die Außenumfangswandung des ersten Gehäuseteils umfasst. Wenn dabei beispielsweise vorgesehen ist, dass der Verbindungsrandbereich ringartig ausgebildet und in die Außenumfangswandung eingreifend positioniert ist, kann eine auch gegen den Austritt von Wärmeträgermedium abgedichtete stabile Fixierung des zweiten Gehäuseteils am ersten Gehäuseteil bereits durch einen Klemmsitz erreicht werden. Selbstverständlich können zusätzliche Befestigungsorgane, wie z.B. Befestigungsschrauben oder dergleichen, eingesetzt werden, um ein Loslösen des zweiten Gehäuseteils vom ersten Gehäuseteil bzw eine Wärmeträgermediumleckage zu verhindern.

Um die Strömung des Wärmeträgermediums im Strömungsraum weiter beeinflussen zu können, wird vorgeschlagen, dass das zweite Gehäuseteil wenigstens eine in den Umfangsströmungsraum sich erstreckende und vorzugsweise die Außenumfangswandung oder/und die Innenumfangswandung berührende Leitrippe umfasst. Derartige Leitrippen haben nicht nur die Funktion das Wärmeträgermedium in bestimmter Richtung zu leiten. Insbesondere dann, wenn sie die Umfangswandungen berühren, können sie auch zur

Erhöhung der zur Wärmeübertragung dienenden Oberfläche beitragen.

Der Effekt der Strömungsführung bzw. auch des verbesserten Wärmeübertrags kann dadurch noch verstärkt werden, dass eine Mehrzahl von Leitrippen ausgehend von einem Außenrandbereich des zweiten Gehäuseteils vorgesehen ist.

Durch die erfindungsgemäß vorgesehene Aufgliederung des Wärmetauschergehäuses in die beiden Gehäuseteile wird es möglich, dort, wo eine höhere thermische Belastung vorliegt, entsprechend auch thermisch stärker belastbares Material einzusetzen, während dort, wo eine vergleichsweise geringe thermische Belastung vorliegt, kostengünstigeres, thermisch weniger stark belastbares Material eingesetzt werden kann. Insbesondere kann vorgesehen sein, dass das erste Gehäuseteil mit Metallmaterial, vorzugsweise Aluminiummaterial, aufgebaut ist oder/und das zweite Gehäuseteil mit Kunststoffmaterial aufgebaut ist.

Die vorliegende Erfindung betrifft ferner ein Fahrzeugheizgerät, umfassend einen Brennerbereich und eine erfindungsgemäße Wärmetauscheranordnung zur Übertagung von im Brennerbereich bereitgestellter Verbrennungswärme auf ein vorzugsweise flüssiges Wärmeträgermedium.

Die vorliegende Erfindung wird nachfolgend mit Bezug auf die beiliegenden Figuren detailliert beschrieben. Es zeigt:
- Fig. 1: eine Wärmetauscheranordnung im Längsschnitt;
- Fig. 2: ein erstes Gehäuseteil der Wärmetauscheranordnung der Fig. 1 betrachtet in Blickrichtung II in Fig. 1;
- Fig. 3: das erste Gehäuseteil im Längsschnitt, geschnitten längs einer Linie III - III in Fig. 2;
- Fig. 4: eine Längsschnittdarstellung eines zweiten Gehäuseteils der Wärmetauscheranordnung der Fig. 1;
- Fig. 5: eine Axialansicht des zweiten Gehäuseteils der Fig. 4 in Blickrichtung V in Fig. 4.

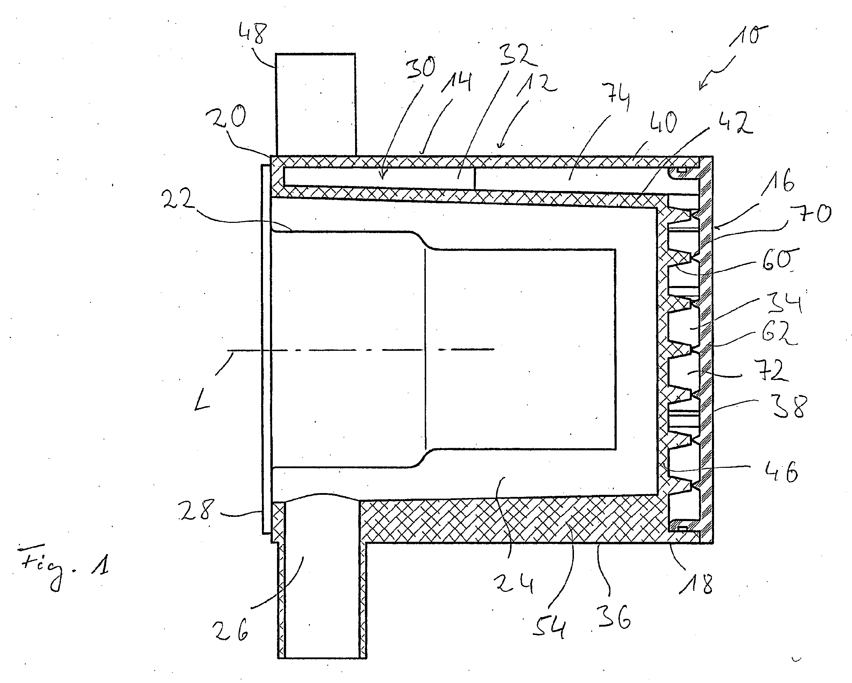

In Fig. 1 ist eine Wärmetauscheranordnung 10 für ein brennstoffbetriebenes Fahrzeugheizgerät im Längsschnitt dargestellt. Die Wärmetauscheranordnung 10 umfasst ein topfartig ausgebildetes Wärmetauschergehäuse 12 mit einem Umfangswandungsbereich 14, der im Wesentlichen in Richtung einer Längsachse L langgestreckt ist und diese umgibt, und einem Bodenwandungsbereich 16. Dieser schließt in einem Endbereich 18 an den Umfangswandungsbereich 14 an. Im anderen Endbereich 20 schließt der Umfangswandungsbereich 14 an den hier nicht dargestellten Brennerbereich eines Fahrzeugheizgerätes an. In diesem Brennerbereich wird Brennstoff zusammen mit Verbrennungsluft verbrannt. Die Verbrennungsabgase strömen in einem Flammrohr 22 in Richtung auf den Bodenwandungsbereich 16 zu. In einem dem Bodenwandungsbereich 16 gegenüber liegenden Endbereich des Flammrohrs 22 treten die Verbrennungsabgase aus und strömen entlang eines Abgasströmungsraums 24 zu einem Abgasauslass 26. Das Flammrohr 22 kann an einem plattenartigen Träger 28 getragen sein, an welchem auch der Umfangswandungsbereich 14 anliegen kann, um somit einen dichten Abschluss des Abgasströmungsraums 24 im Endbereich 20 zu erreichen.

Im Wärmetauschergehäuse 12 ist ein Strömungsraum 30 für ein vorzusgweise flüssiges Wärmeträgermedium gebildet. Der Strömungsraum 30 umfasst im Umfangwandungsbereich 14 einen Umfangsströmungsraum 32 und umfasst im Bodenwandungsbereich 16 einen Bodenströmungsraum 34, der im Endbereich 18 an den Umfangsströmungsraum 32 anschließt.

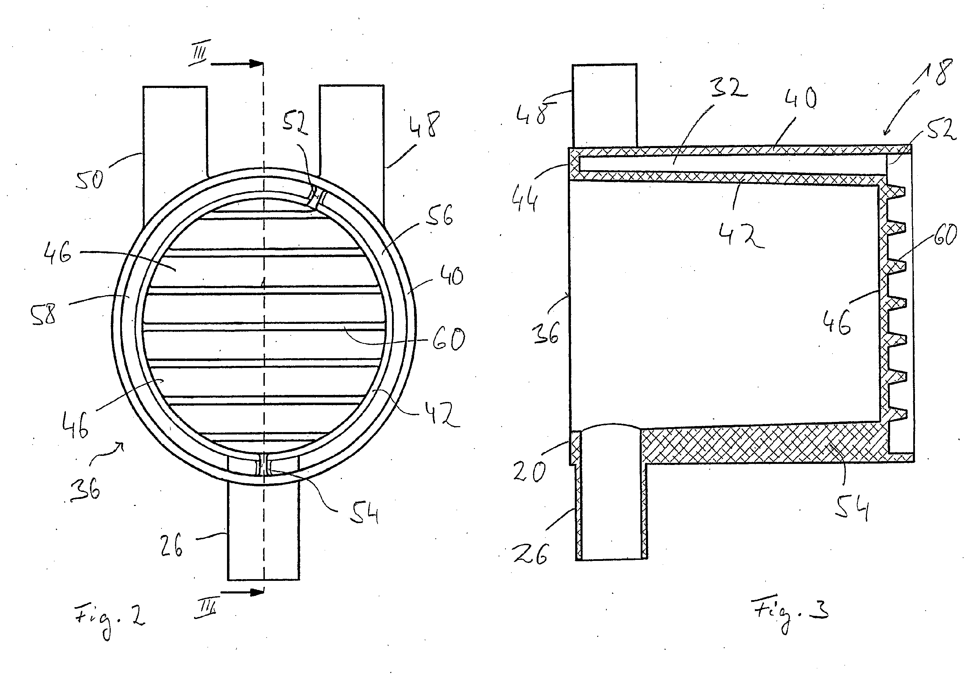

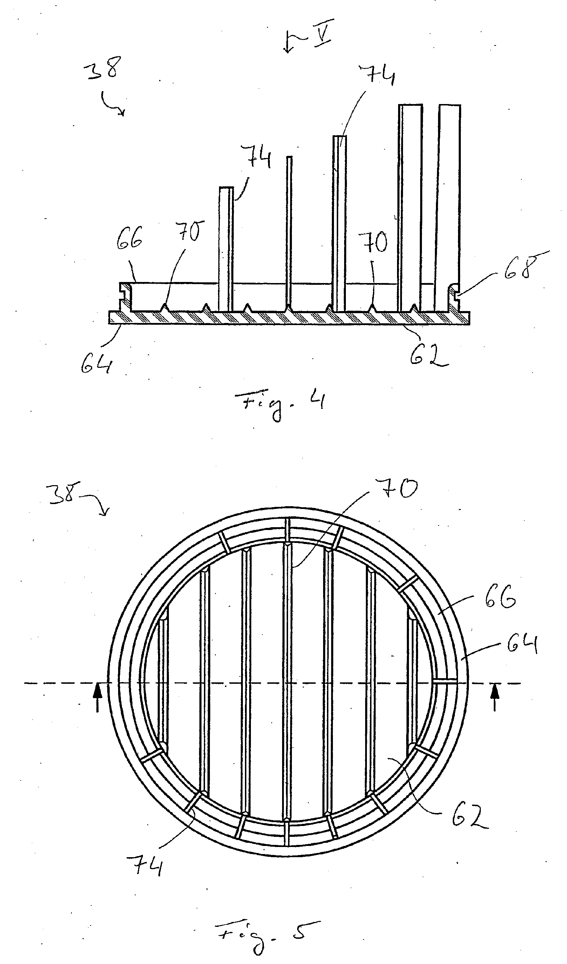

Das Wärmetauschergehäuse 12 umfasst ein nachfolgend mit Bezug auf die Fig. 2 und 3 detaillierter beschriebenes erstes Gehäuseteil 36 sowie ein nachfolgend mit Bezug auf die Fig. 4 und 5 detaillierter beschriebenes zweites Gehäuseteil 38. Diese beiden Gehäuseteile 36, 38 umschließen im Wesentlichen den Strömungraum 30 für das Wärmeträgermedium.

Das in den Fig. 2 und 3 dargestellte erste Gehäuseteil 32 umfasst als integrale Bestandteile desselben eine Außenumfangswandung 40 und radial innerhalb davon und mit radialem Abstand dazu angeordnet eine Innenumfangswandung 42. Im Endbereich 20, also dem von dem Bodenwandungsbereich 16 entfernt liegenden Endbereich des Gehäuseteils 36, verbindet ein ringartiger Verbindungswandbereich 44 die Außenumfangswandung 40 mit der Innenumfangswandung 42, so dass in diesem axialen Endbereich 20 der Umfangsströmungsraum 32 fluiddicht abgeschlossen ist.

Im Endbereich 18 schließt an die Innenumfangswandung 42 eine Innenbodenwandung 46 an. Diese umgrenzt zusammen mit der Innenumfangswandung 42 den Abgasströmungsraum 24. Die aus dem Flammrohr 22 austretenden Verbrennungsabgase strömen direkt auf die Innenbodenwandung 46 zu, von welcher sie nach radial außen abgelenkt werden.

An der Außenumfangswandung 40 ist ein beispielsweise in Form eines Anschlussstutzens ausgebildeter Wärmeträgermediumeinlass 48 vorgesehen. Bei Ausgestaltung als Anschlussstutzen kann dieser einen integralen Bestandteil des ersten Gehäuseteils 36 bilden. In Umfangsrichtung in Abstand zu dem Wärmeträgermediumeinlass 48 und beispielsweise auf näherungsweise gleichem axialen Niveau ist ein beispielsweise ebenfalls in Form eines Anschlussstutzens ausgebildeter Wärmeträgermediumauslass 50 vorgesehen, der gleichermaßen einen integralen Bestandteil des ersten Gehäuseteils 36 bilden kann. Der Abgasauslass 26 ist im dargestellten Beispiel ebenfalls in Form eines Anschlussstutzens ausgebildet, welcher sich durch die Außenumfangswandung 40 hindurch bis zur Innenumfangswandung 42 erstreckt und somit zu dem von der Innenumfangswandung 42 umschlossenen Abgasströmungsraum 24 offen ist. Auch der Abgasauslass 26 kann als integraler Bestandteil des ersten Gehäuseteils 36 bereitgestellt sein.

Es ist hier darauf hinzuweisen, dass selbstverständlich die verschiedenen Ein- bzw. Auslässe auch in anderer Konfiguration, beispielsweise als Öffnungen in jeweiligen Wandungen ausgebildet sein können. Ferner ist es möglich, die verschiedenen Ein- bzw. Auslässe dann, wenn sie als Anschlussstutzen ausgebildet sind, auch als separate Bestandteile bereitzustellen und sie beispielsweise durch Materialschluss an das erste Gehäuseteil 36 anzubinden, wobei die verschiedenen Ein- bzw. auch Auslässe zueinander nicht notwendigerweise gleich gestaltet bzw. an das erste Gehäuseteil angebunden sein müssen.

Der Umfangsströmungsraum 32 zwischen den beiden Umfangswandungen 40, 42 ist durch zwei in Umfangsabstand zueinander liegende und näherungsweise in Richtung der Längsachse L sich erstreckende Trennwandungen 52, 54 in einen ersten Umfangsströmungsraumbereich 56 und einen zweiten Umfangsströmungsraumbereich 58 aufgeteilt. Die Trennwandungen 52, 54 können ebenfalls als integraler Bestandteil des ersten Gehäuseteils 36 bereitgestellt werden. Der erste Umfangsströmungsraumbereich 56 führt vom Wärmetauschermediumeinlass 48 in Richtung zum Bodenströmungsraum 34. Der zweite Umfangsströmungsraumbereich 58 führt vom Bodenströmungsraum 34 in Richtung zum Wärmeträgermediumauslass 50 zurück, so dass in den beiden Umfangsströmungsraumbereichen 56, 58 das Wärmeträgermedium zueinander im Wesentlichen entgegengesetzte Axialströmungsrichtungen aufweist.

An der dem Bodenströmungsraum 34 zugewandten, also vom Abgasströmungsraum 24 abgewandten Seite der Innenbodenwandung 46, sind mehrere erste rippenartige Vorsprünge 60 vorgesehen. Diese liegen in gegenseitigem Abstand und erstrecken sich im dargestellten Ausführungsbeispiel im Wesentlichen geradlinig entlang der Innenbodenwandung 46 im Bodenströmungsraum 34. Man erkennt in Fig. 2, dass die ersten Vorsprünge 60 sich im Wesentlichen vom ersten Umfangsströmungsraumbereich 56 bzw. einem diesem entsprechenden Umfangsbereich in Richtung zum zweiten Umfangsströmungsraumbereich 58 bzw. einem diesem entsprechenden Umfangsbereich erstrecken. Die ersten Vorsprünge 60 unterstützen somit die Strömung des Wärmeträgermediums vom ersten Umfangsströmungsraumbereich 56 zum zweiten Umfangsströmungsraumbereich 58 und vergrößern gleichzeitig die zur Wärmeübertragung zur Verfügung stehende Oberfläche des ersten Gehäuseteils 36.

Das erste Gehäuseteil 36 kann mit all den daran integral ausgebildeten Funktionsbereichen, insbesondere den beiden Umfangswandungen 40, 42 und der Innenbodenwandung 46, den ersten Vorsprüngen 60 und den Trennwandungen 52, 54, als Metallbauteil in einem Druckgussvorgang hergestellt werden. Hierzu kann beispielsweise Aluminiummaterial eingesetzt werden. Dies gewährleistet, dass überall dort, wo vergleichsweise hohe thermische Belastungen auftreten, nämlich einerseits dort, wo das erste Gehäuseteil 36 mit seinen beiden Umfangswandungen 40, 42 an den Brennerbereich anschließt, also im Endbereich 20, und dort, wo die heißen Verbrennungsabgase in Kontakt mit dem ersten Gehäuseteil 36 treten, nämlich der Innenbodenwandung 46 und der Innenumfangswandung 42, thermisch sehr stark belastbares Material eingesetzt wird. Dabei ist es, wie die Fig. 2 und 3 dies zeigen, leicht möglich, einen derartigen Druckgussvorgang durch Bereitstellen jeweiliger Entformungsschrägen an den Umfangswandungen 40, 42, den Trennwandungen 52, 54 und auch den ersten Vorsprüngen 60 mit entsprechend einfach gestalteten Gussformen herzustellen.

Das in den Fig. 4 und 5 dargestellte zweite Gehäuseteil 38 umfasst als wesentlichen Bestandteil eine Außenbodenwandung 62, welche im zusammengesetzten Zustand der Innenbodenwandung 46 axial gegenüber liegt und mit dieser den Bodenströmungsraum 34 begrenzt. In einem Außenrandbereich 64 ist ein vorzugsweise ringartig über den gesamten Außenrandbereich 64 sich erstreckender Verbindungsrand 66 sich axial von der Außenbodenwandung 62 weg erstreckend ausgebildet. Im zusammengefügten Zustand greift der Verbindungsrand 66 im Endbereich 18 in die Außenumfangswandung 40 ein und kann dort beispielsweise unter Presspassung gehalten sein. Ein nach radial außen über den Verbindungsrand 66 noch hervorspringender Teil der Außenbodenwandung 62 kann mit der Außenoberfläche der Außenumfangswandung 40 bündig abschließen.

An der Außenoberfläche des Verbindungsrands 66 kann eine in Umfangsrichtung vorzugsweise umlaufende nutartige Einsenkung 68 gebildet sein. In dieser kann beispielsweise ein den fluiddichten Abschluss des Strömungsraums 30 unterstützendes Dichtelement, beispielsweise O-Ring oder dergleichen, eingesetzt sein. Weiter ist es möglich, an der Innenoberfläche der Außenumfangswandung 40 einen komplementären Rastvorsprung, beispielsweise ringartig umlaufend, auszubilden, der in Verbindung mit der Einsenkung 68 eine Rastverbindung des zweiten Gehäuseteils 38 mit dem ersten Gehäuseteil 36 und somit eine stabile Anbindung realisiert. Selbstverständlich können alternativ oder zusätzlich weitere Verbindungselemente, wie z.B. Verbindungsschrauben oder Rastlaschen oder dergleichen, eingesetzt werden, um das zweite Gehäuseteil 38 gegen ungewolltes Loslösen vom ersten Gehäuseteil 36 zu sichern. Auch eine materialschlüssige Verbindung, wie z.B Verklebung, ist möglich.

An der dem Bodenströmungsraum 34 zugewandten Seite der Außenbodenwandung 62 sind in gegenseitigem Abstand mehrere zweite Vorsprünge 70 vorgesehen. Diese sind entsprechend der Erstreckung der ersten Vorsprünge 60 im Wesentlichen geradlinig sich erstreckend ausgebildet und so angeordnet, dass bei Festlegung des zweiten Gehäuseteils 38 am ersten Gehäuseteil 36 die ersten Vorsprünge 60 und die zweiten Vorsprünge 70 sich paarweise berührend in der gleichen Richtung erstrecken, so dass zwischen einem jeweiligen Paar aus erstem Vorsprung 68 und zweitem Vorsprung 70 und einem benachbarten Paar ein Strömungskanal 72 des Bodenströmungsraums 34 begrenzt ist. Auf diese Art und Weise wird eine definierte Strömungsführung vom ersten Umfangsströmungsraumbereich 56 zum zweiten Umfangsströmungsraumbereich 58 unterstützt. Weiterhin wird eine sehr gleichmäßige Abstützung des zweiten Gehäuseteils 38 am ersten Gehäuseteil 36 näherungsweise über den gesamten Bereich der Außenbodenwandung 62 erreicht.

Ausgehend vom Außenrandbereich 64 des zweiten Gehäuseteils 38 erstrecken sich beispielsweise im Wesentlichen orthogonal zur Außenbodenwandung 62 mit gegenseitigem Umfangsabstand Leitrippen 74. Diese sind, ebenso wie der Verbindungsrand 66 und die zweiten Vorsprünge 70, als integraler Bestandteil des zweiten Gehäuseteils 38 bereitgestellt und erfahren dadurch, dass sie sich auch ausgehend vom Verbindungsrand 66 erstrecken, eine stabile Anbindung an die Außenbodenwandung 62.

Die Leitrippen 74 erstrecken sich näherungsweise axial in den Umfangsströmungsraum 32 und können dabei mit ihrem radial äußeren Bereich an der Innenoberfläche der Außenumfangswandung 40 oder/und mit ihrem radial inneren Bereich an der Außenumfangsfläche der Innenumfangswandung 42 anliegen. Die Leitrippen 74 unterstützen damit nicht nur die Strömungsführung des Wärmeträgermediums im Umfangsströmungsraum 32, sondern sie können insbesondere durch ihren Kontakt mit den Umfangswandungen, insbesondere der Innenumfangswandung 42, zu einer größeren Wärmeübertagungsfläche und damit zur verstärkten Einleitung von Wärme in das Wärmeträgermedium beitragen.

Wie die Fig. 4 und 5 dies zeigen, müssen nicht alle Leitrippen 74 mit gleicher axialer Erstreckungslänge ausgebildet sein. Auch muss nicht notwendigerweise eine gleichmäßige Umfangsverteilung vorgesehen sein. Zwar können alle Leitrippen 74 mit gleicher axialer Erstreckungslänge ausgehend von der Außenbodenwandung 62 oder/und mit gleichmäßigem Umfangsabstand zueinander ausgebildet sein. Die Ausgestaltung und Positionierung der Leitrippen 74 kann jedoch entsprechend den gewünschten Strömungsverhältnissen im Strömungsraum 30 variiert werden.

Da das zweite Gehäuseteil 38 in einem Bereich positioniert ist, der einer vergleichsweise geringen thermischen Belastung ausgesetzt ist, ist es nicht erforderlich, dieses aus einem vergleichsweise kostenintensiven, thermisch hochstabilen Material, wie z.B. Metallmaterial, aufzubauen. Vielmehr kann für das zweite Gehäuseteil 38 Kunststoffmaterial eingesetzt werden. Auch der Kontakt der zweiten Vorsprünge 70 mit den ersten Vorsprüngen 60 des ersten Gehäuseteils 36 führt nicht zu einer übermäßig starken thermischen Belastung. Man erkennt insbesondere in Fig. 4, dass die zweiten Vorsprünge 70 mit im Wesentlichen spitzem bzw. dachartigem Querschnittsprofil ausgebildet sind, was dazu führt, dass die Kontaktfläche zu den ersten Vorsprüngen 60 auf einen nahezu linienartigen Kontaktbereich begrenzt ist, was zu einer entsprechenden Begrenzung des Wärmeflusses von der Innenbodenwandung 46 auf die Außenbodenwandung 62 führt.

Der erfindungsgemäße Aufbau eines Wärmetauschergehäuses mit seinen beiden Gehäuseteilen ermöglicht bei einfacher Herstellbarkeit, nämlich im Gussverfahren, den Einsatz im Allgemeinen kostenintensiver thermisch stark belastbarer Materialien nur dort, wo auch vergleichsweise hohe thermische Belastungen auftreten. Dort, wo dies nicht der Fall ist, kann vergleichsweise kostengünstiges Material eingesetzt werden. Weiter von Vorteil ist, dass die Verbindung der beiden Gehäuseteile ebenfalls in einem Bereich erfolgt, der vergleichsweise gering thermisch belastet ist, nämlich in dem von einem Brennerbereich abgewandten Endbereich des Wärmetauschergehäuses. Somit unterliegt diese Verbindung auch einer geringeren thermischen Belastung, was den Einsatz einfacherer und mithin auch kostengünstigerer Verbindungsmittel bzw. Dichtungsmittel ermöglicht.

## Patentansprüche

1. Wärmetauscheranordnung, insbesondere für ein brennstoffbetriebenes Fahrzeugheizgerät, umfassend ein in Richtung einer Längsachse (L) langgestrecktes, topfartiges Wärmetauschergehäuse (12) mit einem Umfangswandungsbereich (14) und in einem Endbereich (18) des Umfangswandungsbereichs (14) einem Bodenwandungsbereich (16), wobei in dem Wärmetauschergehäuse (12) ein Strömungsraum (30) für Wärmeträgermedium mit einem Umfangsströmungsraum (32) und einem in Verbindung mit dem Umfangsströmungsraum stehenden Bodenströmungsraum (34) gebildet ist, wobei das Wärmetauschergehäuse (12) ein erstes Gehäuseteil (36) und ein in Verbindung mit dem ersten Gehäuseteil (36) den Strömungsraum (30) umschließendes zweites Gehäuseteil (38) umfasst, **dadurch gekennzeichnet,**
**dass** das erste Gehäuseteil als integrale Bestandteile umfasst:
- den gesamten Umfangswandungsbereich (14) bereitstellend, eine Außenumfangswandung (40) und eine Innenumfangswandung (42),
- eine in dem einen Endbereich an die Innenumfangswandung anschließende Innenbodenwandung (46),
**dass** das zweite Gehäuseteil umfasst:
- eine in dem einen Endbereich mit der Außenumfangswandung (40) verbundene oder verbindbare Außenbodenwandung (62).

2. Wärmetauscheranordnung nach Anspruch 1,
**dadurch gekennzeichnet, dass** an der Außenumfangswandung (40) ein Wärmeträgermediumeinlass (48) und ein Wärmeträgermediumauslass (50) vorgesehen sind.

3. Wärmetauscheranordnung nach Anspruch 2,
**dadurch gekennzeichnet, dass** der Wärmeträgermediumeinlass (48) und der Wärmeträgermediumauslass (50) zueinander in Umfangsrichtung versetzt sind.

4. Wärmetauscheranordnung nach Anspruch 2 oder 3,
**dadurch gekennzeichnet, dass** das erste Gehäuseteil (36) zwischen der Innenumfangswandung (42) und der Außenumfangswandung (40) wenigstens eine in Richtung der Längsachse (L) sich erstreckende Trennwandung (52, 54) umfasst.

5. Wärmetauscheranordnung nach Anspruch 3 und Anspruch 4,
**dadurch gekennzeichnet, dass** zwei in Umfangsrichtung in Abstand zueinander angeordnete Trennwandungen (52, 54) einen in Verbindung mit dem Wärmeträgermediumeinlass (48) stehenden ersten Umfangsströmungsraumbereich (56) und einen in Verbindung mit dem Wärmeträgermediumauslass (56) stehenden zweiten Umfangsströmungsraumbereich (58) begrenzen.

6. Wärmetauscheranordnung nach einem der Ansprüche 1 bis 5,
**dadurch gekennzeichnet, dass** das erste Gehäuseteil (36) an einer dem Bodenströmungsraum (34) zugewandten Seite der Innenbodenwandung (46) wenigstens einen ersten Leitvorsprung (60) umfasst.

7. Wärmetauscheranordnung nach Anspruch 5 und Anspruch 6,
**dadurch gekennzeichnet, dass** der wenigstens eine erste Leitvorsprung (60) sich in Richtung vom ersten Umfangsströmungsraumbereich (56) zum zweiten Umfangsströmungsraumbereich (58) erstreckt.

8. Wärmetauscheranordnung nach einem der Ansprüche 1 bis 7,
**dadurch gekennzeichnet, dass** das zweite Gehäuseteil (38) an einer dem Bodenströmungsraum (34) zugewandten Seite der Außenbodenwandung (62) wenigstens einen zweiten Leitvorsprung (70) umfasst.

9. Wärmetauscheranordnung nach Anspruch 6 und Anspruch 8,
**dadurch gekennzeichnet, dass** wenigstens ein erster Leitvorsprung (60) und ein diesem zugeordneter zweiter Leitvorsprung (70) sich vorzugsweise gegenseitig berührend in der gleichen Richtung im Bodenströmungsraum (34) erstrecken.

10. Wärmetauscheranordnung nach einem der Ansprüche 1 bis 9,
**dadurch gekennzeichnet, dass** das zweite Gehäuseteil (38) in einem Außenrandbereich (64) der Außenbodenwandung einen Verbindungsrandbereich (66) zum fluiddichten Anschluss des zweiten Gehäuseteils (38) an die Außenumfangswandung (40) des ersten Gehäuseteils (36) umfasst.

11. Wärmetauscheranordnung nach Anspruch 10,
**dadurch gekennzeichnet, dass** der Verbindungsrandbereich (66) ringartig ausgebildet und in die Außenumfangswandung (40) eingreifend positioniert ist.

12. Wärmetauscheranordnung nach einem der Ansprüche 1 bis 11,
**dadurch gekennzeichnet, dass** das zweite Gehäuseteil (38) wenigstens eine in den Umfangsströmungsraum (32) sich erstreckende und vorzugsweise die Außenumfangswandung (40) oder/und die Innenumfangswandung (42) berührende Leitrippe (74) umfasst.

13. Wärmetauscheranordnung nach Anspruch 12,
**dadurch gekennzeichnet, dass** eine Mehrzahl von Leitrippen (74) ausgehend von einem Außenrandbereich (64) des zweiten Gehäuseteils (38) vorgesehen ist.

14. Wärmetauscheranordnung nach einem der Ansprüche 1 bis 13,
**dadurch gekennzeichnet, dass** das erste Gehäuseteil (36) mit Metallmaterial, vorzugsweise Aluminiummaterial, aufgebaut ist oder/und das zweite Gehäuseteil (36) mit Kunststoffmaterial aufgebaut ist.

15. Fahrzeugheizgerät, umfassend einen Brennerbereich und eine Wärmetauscheranordnung (10) nach einem der vorangehenden Ansprüche zur Übertagung von im Brennerbereich bereitgestellter Verbrennungswärme auf ein vorzugsweise flüssiges Wärmeträgermedium.

## Claims

1. Heat exchanger arrangement, in particular for a fuel operated vehicle heating device, comprising a pot-like heat exchanger housing (12) elongated in the direction of a longitudinal axis (L) with a circumferential wall section (14) and a bottom wall section (16) in an end section (18) of said circumferential wall section (14), wherein in said heat exchanger housing (12) a flow space (30) is formed for a heat carrier medium with a circumferential flow space (32) and a bottom flow space (34) in communication with said circumferential flow space, wherein the heat exchanger housing (12) comprises a first housing part (36) and a second housing part (38) enclosing the flow space (30) together with the first housing part (36), **characterized in that**
the first housing part comprises as integral components:
- an outer circumferential wall (40) and an inner circumferential wall (42) providing the entire circumferential wall section (14),
- an inner bottom wall (46) connected to the inner circumferential wall in the one end section,
**in that** the second housing part comprises:
- an outer bottom wall (62) connected to or connectable to the outer circumferential wall (40) in the one end section.

2. Heat exchanger arrangement according to claim 1,
**characterized by** a heat carrier medium inlet (48) and a heat carrier medium outlet (50) being provided at said outer circumferential wall (40).

3. Heat exchanger arrangement according to claim 2,
**characterized by** the heat carrier medium inlet (48) and the heat carrier medium outlet (50) being offset to each other in the circumferential direction.

4. Heat exchanger arrangement according to claim 2 or 3,
**characterized by** the first housing part (36) comprising, between the inner circumferential wall (42) and the outer circumferential wall (40), at least one separating wall (52, 54) extending in the direction of the longitudinal axis (L).

5. Heat exchanger arrangement according to claim 3 and claim 4, **characterized in that** two separating walls (52, 54) spaced to each other in the circumferential direction limit a first circumferential flow space section (56) in communication with the heat carrier medium inlet (48) and a second circumferential flow space section (58) in communication with the heat carrier medium outlet (56).

6. Heat exchanger arrangement according to one of claims 1 to 5, **characterized by** the first housing part (36) comprising at least one first guiding projection (60) at a side of the inner bottom wall (46) facing the bottom flow space (34).

7. Heat exchanger arrangement according to claim 5 and claim 6, **characterized by** the at least one first guiding projection (60) extending in the direction from the first circumferential flow space section (56) to the second circumferential flow space section (58).

8. Heat exchanger arrangement according to one of claims 1 to 7, **characterized by** the second housing part (38) comprising at least a second guiding projection (70) at a side of the outer bottom wall (62) facing the bottom flow space (34).

9. Heat exchanger arrangement according to claim 6 and claim 8, **characterized in that** at least a first guiding projection (60) and an associated second guiding projection (70), preferably contacting each other, extend in the same direction in the bottom flow space (34).

10. Heat exchanger arrangement according to one of claims 1 to 9,
**characterized by** the second housing part (38) comprising in an outer border section (64) of the outer bottom wall a connecting border section (66) for a fluid tight connection of the second housing part (38) to the outer circumferential wall (40) of the first housing part (36).

11. Heat exchanger arrangement according to claim 10,
**characterized in that** the connecting border section (66) is adapted ring-like and positioned to engage the outer circumferential wall (40).

12. Heat exchanger arrangement according to one of claims 1 to 11,
**characterized by** the second housing part (38) comprising at least one guiding rib (74) extending into the circumferential flow space (32) and preferably contacting the outer circumferential wall (40) or/and the inner circumferential wall (42).

13. Heat exchanger arrangement according to claim 12,
**characterized by** a plurality of guiding ribs (74) being provided extending from an outer border section (64) of the second housing part (38).

14. Heat exchanger arrangement according to one of claims 1 to 13,
**characterized by** the first housing part (36) being fabricated with metal material, preferably aluminium material, or/and by the second housing part (36) being fabricated with plastic material.

15. Vehicle heating device, comprising a burner section and a heat exchanger arrangement (10) according to one of the preceding claims for the transfer of combustion heat provided in the burner section to a preferably fluid heat carrier medium.

## Revendications

1. Arrangement d'échangeur de chaleur, en particulier pour un véhicule utilisant un combustible, comprenant un boîtier d'échangeur de chaleur (12) sous forme de pot, élongé dans le sens d'un axe longitudinal (L), avec une section de paroi circonférentielle (14) et dans une section d'extrémité (18) de la section de paroi circonférentielle (14) une section de paroi de fond (16), où dans le boîtier d'échangeur de chaleur (12) un espace d'écoulement (30) est prévu pour un médium caloporteur, avec un espace d'écoulement circonférentiel (32) et un espace d'écoulement de fond (34) en communication avec l'espace d'écoulement circonférentiel (32), où le boîtier d'échangeur de chaleur (12) comprend une première portion de boîtier (36) et une deuxième portion de boîtier (38) enfermant l'espace d'écoulement (30) avec la première portion de boîtier (36), **caractérisé en ce que** la première portion de boîtier comprend en tant que composants faisant partie intégrale:
- une paroi circonférentielle externe (40) et une paroi circonférentielle interne (42) prévoyant l'entière section de paroi circonférentielle (14),
- une paroi de fond interne (46) raccordée à la paroi circonférentielle interne dans ladite une section d'extrémité,
**en ce que** la deuxième portion de boîtier comprend:
- une paroi de fond externe (62) raccordée ou raccordable à la paroi circonférentielle externe (40) dans ladite une section d'extrémité.

2. Arrangement d'échangeur de chaleur selon la revendication 1,
**caractérisé par** une entrée de médium caloporteur (48) et une sortie de médium caloporteur (50) étant prévus à la paroi circonférentielle externe (40).

3. Arrangement d'échangeur de chaleur selon la revendication 2,
**caractérisé par** l'entrée de médium caloporteur (48) et la sortie de médium caloporteur (50) étant décalées l'une par rapport à l'autre dans le sens circonférentiel.

4. Arrangement d'échangeur de chaleur selon la revendication 2 ou 3,
**caractérisé par** la première portion de boîtier (36) comprenant entre la paroi circonférentielle interne (42) et la paroi circonférentielle externe (40) au moins une paroi de séparation (52, 54) s'étendant dans le sens de l'axe longitudinal (L).

5. Arrangement d'échangeur de chaleur selon la revendication 3 et la revendication 4,
**caractérisé par** deux parois de séparation (52, 54) espacées dans le sens circonférentiel limitant une première section d'espace d'écoulement (56) en communication avec l'entrée de médium caloporteur (48) et une deuxième section d'espace d'écoulement (58) en communication avec la sortie de médium caloporteur (56).

6. Arrangement d'échangeur de chaleur selon une des revendications 1 à 5,
**caractérisé par** la première portion de boîtier (36) comprenant au moins une première saillie de guidage (60) à un côté de la paroi de fond interne (46) faisant face à l'espace d'écoulement de fond (34).

7. Arrangement d'échangeur de chaleur selon la revendication 5 et la revendication 6,
**caractérisé par** ladite au moins une saillie de guidage (60) s'étendant dans le sens de la première section d'espace d'écoulement (56) à la deuxième section d'espace d'écoulement (58).

8. Arrangement d'échangeur de chaleur selon une des revendications 1 à 7,
**caractérisé par** la deuxième portion de boîtier (38) comprenant au moins une deuxième saillie de guidage (70) à un côté de la paroi de fond externe (62) faisant face à l'espace d'écoulement de fond (34).

9. Arrangement d'échangeur de chaleur selon la revendication 6 et la revendication 8,
**caractérisé par** au moins une première saillie de guidage (60), et une deuxième saillie de guidage (70) associée à cette dernière, s'étendant de préférence dans le même sens dans l'espace d'écoulement de fond (34) en se contactant mutuellement.

10. Arrangement d'échangeur de chaleur selon une des revendications 1 à 9,
**caractérisé par** la deuxième portion de boîtier (38) comprenant dans une section de bord extérieur (64) de la paroi de fond externe une section de bord de connexion (66) pour un raccordement étanche au fluide de la deuxième portion de boîtier (38) à la paroi circonférentielle externe (40) de la première portion de boîtier (36).

11. Arrangement d'échangeur de chaleur selon la revendication 10,
**caractérisé par** la section de bord de connexion (66) ayant une forme annulaire et étant positionnée engagée dans la paroi circonférentielle externe (40).

12. Arrangement d'échangeur de chaleur selon une des revendications 1 à 11,
**caractérisé par** la deuxième portion de boîtier (38) comprenant au moins une nervure de guidage (74) s'étendant dans l'espace d'écoulement circonférentiel (32) et contactant de préférence la paroi circonférentielle externe (40) ou/et la paroi circonférentielle interne (42).

13. Arrangement d'échangeur de chaleur selon la revendication 12,
**caractérisé par** une pluralité de nervures de guidage (74) étant prévues, s'étendant d'une section de bord extérieur (64) de la deuxième portion de boîtier (38).

14. Arrangement d'échangeur de chaleur selon une des revendications 1 à 13, **caractérisé par** la première portion de boîtier (36) étant fabriquée en un matériau métallique, de préférence en aluminium, ou/et par la deuxième portion de boîtier (36) étant fabriquée en matériau plastique.

15. Dispositif de chauffage pour un véhicule, comprenant une section de brûleur (10) selon une des revendications précédentes pour le transfert de chaleur de combustion générée dans la section de brûleur à un médium caloporteur de préférence fluide.
